**Europäisches Patentamt**

**European Patent Office**

**Office européen des brevets**

(19)

(11) Veröffentlichungsnummer: **0 250 957**
**B1**

(12) # EUROPÄISCHE PATENTSCHRIFT

(45) Veröffentlichungstag der Patentschrift:
**27.12.90**

(51) Int. Cl.⁵: **B60K 28/10**

(21) Anmeldenummer: **87108364.8**

(22) Anmeldetag: **10.06.87**

(54) Antriebseinheit eines Kraftfahrzeuges, insbesondere Nutzfahrzeuges.

(30) Priorität: **28.06.86 DE 3621840**

(43) Veröffentlichungstag der Anmeldung:
**07.01.88 Patentblatt 88/1**

(45) Bekanntmachung des Hinweises auf die Patenterteilung:
**27.12.90 Patentblatt 90/52**

(84) Benannte Vertragsstaaten:
**AT DE IT SE**

(56) Entgegenhaltungen:
**DE-A- 1 630 822**
**GB-A- 1 374 096**
**US-A- 2 909 078**
**US-A- 3 851 723**

(73) Patentinhaber: **Iveco Magirus Aktiengesellschaft,
Schillerstrasse 2 Postfach 27 40, D-7900 Ulm/Donau(DE)**

(72) Erfinder: **Giurca, Octavian, Dipl.-Ing.(TU),
Staufenstrasse 67, D-7608 Niederstotzingen(DE)**
Erfinder: **Mall, Wolfgang, Dipl.-Ing. (FH), Hirtenhau 9,
D-7930 Ehingen/Donau(DE)**

(74) Vertreter: **Socha, Peter, Iveco Magirus AG
Postfach 2740 Schillerstrasse 2, D-7900 Ulm(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Antriebseinheit eines Kraftfahrzeugs, insbesondere Nutzfahrzeugs, gemäß Oberbegriff des Anspruchs 1.

Bei den bisher bekannten Nutzfahrzeugen ist der Antriebsstrang entsprechend der Motorisierung (Leistung, Drehmoment) ausreichend dimensioniert, wobei die Motorisierung begrenzt stark ausgelegt ist, um in extremen Einsatzfällen eine Überbeanspruchung der Antriebseinheit zu vermeiden. Es besteht jedoch heutzutage die Tendenz, den Kunden leistungsstärkere Motoren anzubieten, um auch besonders extremen Einsatzfällen, z.B. Bergfahrt bei Aufrechterhaltung höherer Geschwindigkeit, gewachsen zu sein.

Aus DE-OS 1 630 822 ist eine Antriebseinheit eines Kraftfahrzeugs der eingangs genannten Art bekannt, welche eine Vorrichtung zur Begrenzung des Höchstdrehmomentes an der Antriebsachse des Fahrzeugs vorsieht, deren Regelgröße vom eingeschalteten Getriebeuntersetzungsverhältnis zwischen Motor und Triebachse abhängig ist. Insbesondere wird vorgeschlagen, als Regelgröße die Getriebeschalthebelstellung zu verwenden oder als Sensoranordnung einen Drehmomentfühler hinter dem Schaltgetriebe anzuordnen, welcher bei zu stark ansteigendem Drehmoment in den Triebwerksteilen eine Drosselung der Motorleistung bewirkt.

Aufgabe der Erfindung ist die Verbesserung des vorgenannten Stands der Technik durch Schaffung einer Antriebseinheit der eingangs genannten Art, deren Sensoranordnung besonders einfach aufgebaut und wirkungsvoll betrieben werden kann.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 8.

Wesen der Erfindung ist, ein ohnehin am Kraftfahrzeug vorhandenes Konstruktionselement, nämlich das Sperrdifferential, zur Ermittlung des maximalen Drehmomentes im Antriebsstrang auszunützen. Als Regelgröße für die Höchstdrehmomentbegrenzung dient der Sperrvorgang des Getriebedifferentials, wobei die Sensoranordnung über die Steuermittel die Einspritzpumpe im Sinne verminderter Brennstoffeinspritzung steuert. Eine erfindungsgemäß gestaltete Sensoranordnung ist sehr wirkungsvoll und leicht zu realisieren. Insbesondere können bestehende Antriebseinheiten einfach umgerüstet werden. Die Verwendung der Sperrung des Getriebedifferentials als Regelgröße der Sensoranordnung ist nach dem eingangs zitierten Stand der Technik weder bekannt noch nahegelegt.

Durch die Erfindung kann der Antriebsstrang vergleichsweise schwach dimensioniert bzw. es kann der Antriebsstrang bekannter Nutzfahrzeuge beibehalten und dennoch eine stärkere Motorisierung mit größerer Leistung und einem größeren Drehmoment bei einem Kraftfahrzeug, insbesondere Nutzfahrzeug, eingerichtet werden. Die Gefahr von Beschädigungen der Antriebseinheit aufgrund der stärkeren Motorisierung besteht nicht, da bei eingeschalteter Diferentialsperre, vor allem bei längsgesperrtem Verteilergetriebedifferentials, bei einem Durchdrehen einer oder mehrerer Achsen das gesamte Antriebsmoment auf die verbleibende Achse nicht übertragen werden kann. In den unteren Gängen, insbesondere beim Anfahren wird durch die Erfindung die angebotene Motorleistung gedrosselt. Demgegenüber steht in besonders extremen Einsatzfällen die angebotene Motorleistung voll zur Verfügung, beispielsweise bei einer Bergfahrt unter Aufrechterhaltung einer höheren Geschwindigkeit. Es wird der Antriebsstrang vor überlastung geschützt, was mit einer Erhöhung der Funktionssicherheit einhergeht. Da kein überdimensionierter Antriebsstrang durch Motoren mit höherer Leistung notwendig ist, ergibt sich eine Gewichts- und eine Kosteneinsparung.

Die Erfindung wird nachfolgend anhand von Ausführungsbeispielen unter Bezugnahme auf die beigefügte Zeichnung näher erläutert; es zeigen:

Fig. 1 das Drehmoment M in Abhängigkeit von der Drehzahl n und der Stellung der Regelstange der Einspritzpumpe bzw. des Regelstangenwegs R in schematischer Darstellung,

Fig. 2 in schematischer Seitenansicht ein allradangetriebenes Kraftfahrzeug mit Einspritzpumpe, deren Regelstange mittels in die Füllungsregelung integriertem Stellmotor mit mechanischer Verstelleinrichtung betätigbar ist,

Fig. 3 eine der Fig. 2 ähnliche Seitenansicht eines Kraftfahrzeugs mit einer Einspritzpumpe, die mittels doppelt wirkendem Druckluftzylinder im Sinne verminderter Brennstoffeinspritzung betätigbar ist,

Fig. 4 der doppelt wirkende Druckluftzylinder der Fig. 3 in größerer Einzelheit,

Fig. 5 eine der Fig. 2 ähnliche Seitenansicht eines Fahrzeugs ohne Allrad-Antrieb mit Steuermitteln der Einspritzpumpe der Fig. 2 und einer Sensoranordnung am Getriebe,

Fig. 6 eine der Fig. 3 ähnliche Seitenansicht eines Fahrzeugs ohne Allrad-Antrieb mit einem einfach wirkenden Druckluftzylinder zwecks Betätigung der Einspritzpumpe im Sinne verminderter Brennstoffeinspritzung, und

Fig. 7 der einfach wirkende Druckluftzylinder der Fig. 6 in größerer Einzelheit.

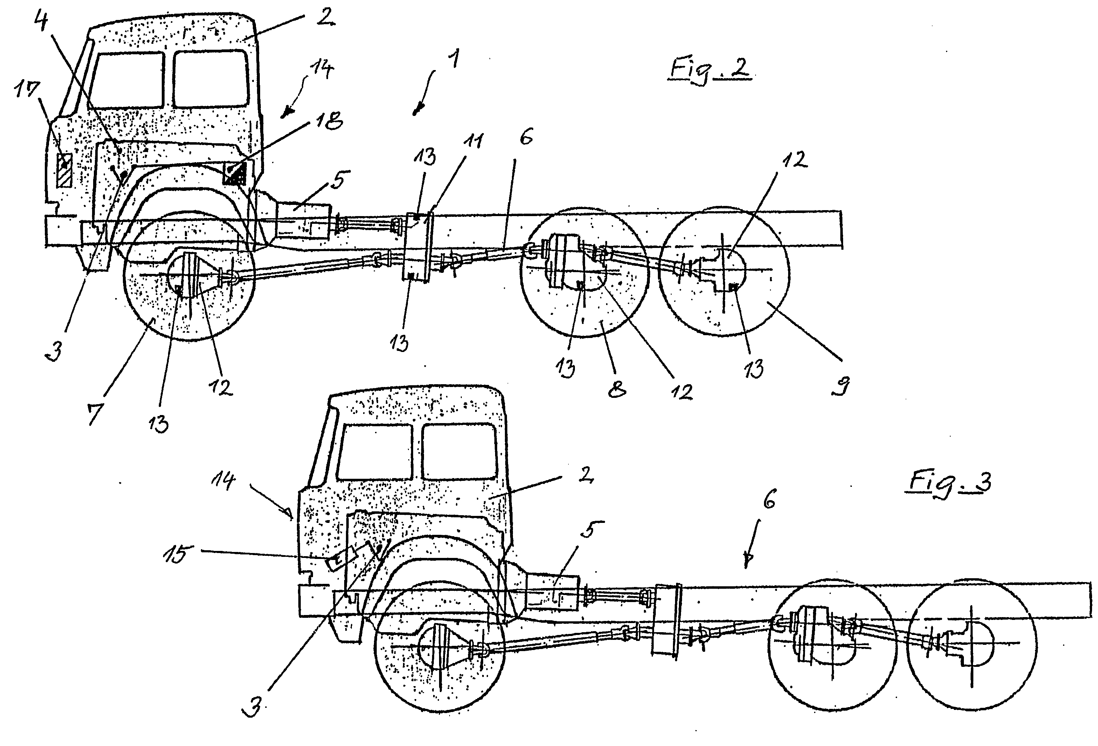

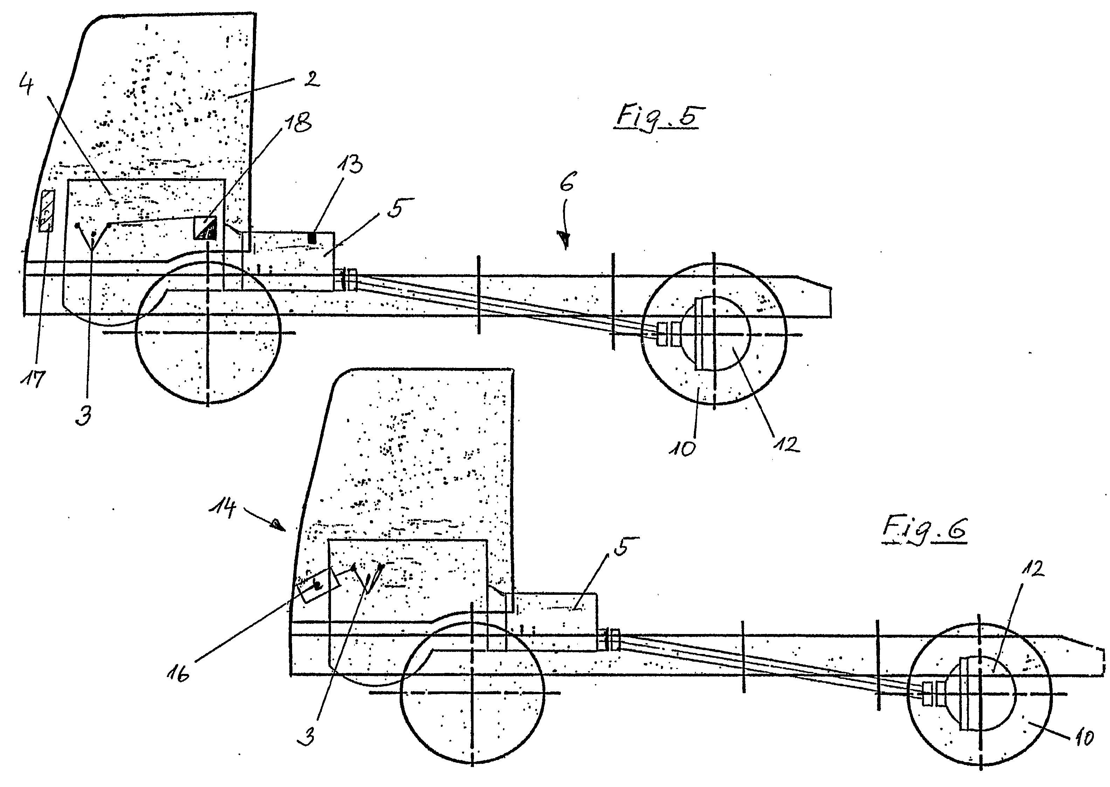

Gemäß Zeichnung umfaßt eine Antriebseinheit (1) eines Kraftfahrzeugs (2), insbesondere eines Nutzfahrzeugs, einen durch eine Einspritzpumpe (3) geregelten Verbrennungsmotor (4), ein Getriebe (5) und einen Antriebsstrang (6) zu den angetriebenen Achsen (7, 8, 9, 10), wobei in den Antriebsstrang (6) ein Verteilergetriebedifferential (11) gemäß den Fig. 2 und 3 bei einem allradangetriebbenen Fahrzeug und Achsdifferentiale (12) an den angetriebenen Achsen sowohl bei dem Fahrzeug mit Allrad-Antrieb gemäß den Fig. 2 und 3 als auch beim Fahrzeug ohne Allrad-Antrieb gemäß den Fig. 5 und 6 vorgesehen sind.

Eine Sensoranordnung (13) ermittelt das Drehmoment (M) im Antriebsstrang (6) und steuert bei Überschreitung eines vorgegebenen Drehmomentwertes ihrerseits über Steuermittel (14) die Einspritzpumpe (3) im Sinne verminderter Brennstoffzufuhr. Die Steuermittel (14) der Einspritzpumpe (3) umfassen eine Steuereinheit (17) und eine Regeleinheit (18), die nachfolgend noch erläutert werden. Eine Sensoranordnung (13) in Form einer Drehmomenten-Meßeinrichtung befindet sich beim Ausführungsbeispiel der Fig. 2 beim Verteilergetriebedifferential (11), wie auch die Sensoranordnung (13) bei den einzelnen Achsdifferentialen (12) vorgesehen ist.

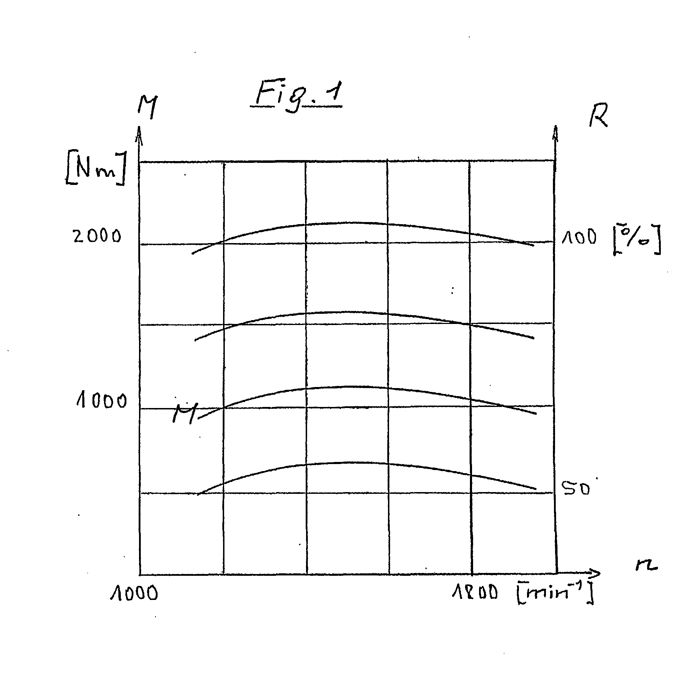

Erfindungsgemäß wird das Drehmoment (M) gemäß Fig. 1 in Abhängigkeit von der Drehzahl (n) und der Stellung der Regelstange der Einspritzpumpe (3) bei . den eingangs genannten Fahrzuständen (niedrige Gänge bzw. eingeschaltete Differentialsperre) begrenzt. Es ergeben sich die nachfolgenden zwei Möglichkeiten:

1. Das Drehmoment im Antriebsstrang (6) wird von am Getriebe (5), am Verteilergetriebedifferential (11) sowie gegebenenfalls zusätzlich an den Achsdifferentialen (12) angebrachten Einrichtungen ermittelt. In Abhängigkeit von diesen ermittelten Werten wird die Regelstange der Einspritz-pumpe (3) mittels elektrischem Stellmotor betätigt (vgl. Fig. 2: Kraftfahrzeug mit Allrad-Antrieb; vgl. Fig. 5: Kraftfahrzeug ohne Allrad-Antrieb).

2. Die Stellung der Regelstange der Einspritzpumpe (3) wird in alternativer Ausgestaltung der Erfindung von einem Druckluftzylinder (15 bzw. 16) gemäß den Fig. 3, 4, 6 und 7 gesteuert, der bei eingeschalteten Differentialsperren vor allem bei längsgesperrtem Verteilergetriebedifferential (11) sowie bei eingeschalteten niedrigen Gängen im Sinne einer geringeren Einspritzmenge betätigt wird.

Es ist besonders hervorzuheben, daß sich die wesentliche Wirkung der Erfindung bereits dann ergibt, wenn die Drehmomentmessung in Abhängigkeit vom längsgesperrten Verteilergetriebedifferential (11) erfolgt. In diesem Fall werden nämlich die an die einzelnen Achsen herangeführten Drehmomente in gewünschtem Maße reduziert, so daß dann bei Auftreten unterschiedlicher Drehmomente in den einzelnen Achsen (links/rechts) normalerweise keine unzulässig hohen Drehmomente entstehen. Sicherheitshalber besteht jedoch in Weiterbildung der Erfindung grundsätzlich die Möglichkeit, daß die Drehmomentmessung zusätzlich auch an den einzelnen Achsdifferentialen (12) erfolgt.

Die Drehmomenten-Ermittlung erfolgt zweckmäßigerweise durch einen Sensor, welcher einfach ermittelt, ob bestimmte Gänge (nämlich mit unzulässig hohem Drehmoment) eingelegt sind, und welcher dann die Steuermittel (14) derart aktiviert, daß die Einspritzpumpe (3) im Sinne verringerter Einspritzung verstellt wird.

Als "Sensor" ist beispielsweise vewendbar:

– ein mechanisch-elektrischer Schalter, welcher bei entsprechender Schaltwellenstellung die Steuermittel (14) erfindungsgemäß aktiviert, oder
– bei pneumatischen Schaltungen ein pneumatischer Geber, welcher bei entsprechender Gangeinstellung die erfindungsgemäße Wirkung der Steuermittel (14) herbeiführt, um die Leistung des Verbrennungsmotors (4) gegebenenfalls zu drosseln.

Bei einem Allrad-Antriebsfahrzeug gemäß Fig. 2 wird mithin die Regelstange der Einspritzpumpe (3) mittels in die Füllungsregelung integriertem Stellmotor mit mechanischer Verstelleinrichtung betätigt: insbesondere wird ein Impuls von der Sensoranordnung (13) bzw. Drehmomenten-Meßeinrichtung an die Steuereinheit (17) der Steuermittel (14) abgegeben. Die Steuereinheit (17) gibt ihrerseits den Impuls an die Regeleinheit (18), nämlich den Stellmotor mit mechanischer Verstelleinrichtung, weiter. Die Regeleinheit (18) verändert die Stellung der Regelstange der Einspritzpumpe (3) im Sinne verminderter Brennstoffzufuhr.

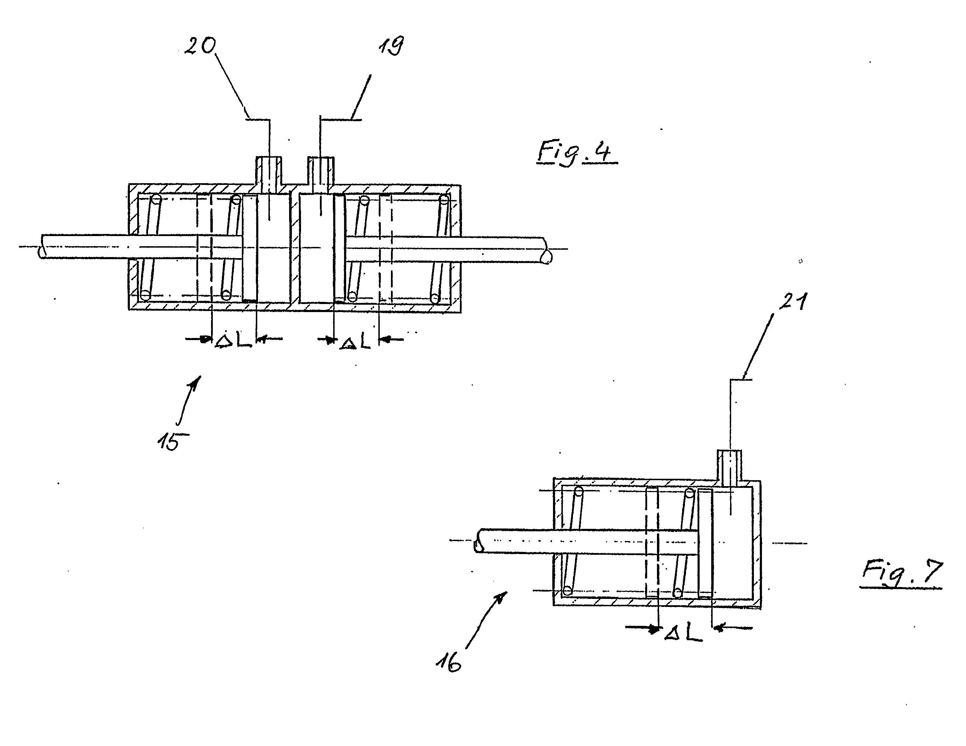

Beim Allrad-Antriebsfahrzeug gemäß Fig. 3 erfolgt die Betätigung der Einspritzpumpe (3) mittels doppelt wirkendem Druckluftzylinder gemäß den Fig. 3 und 4: der Druckluftzylinder (15) wird als Regeleinheit in die Füllungsregelung integriert. Er ist sowohl an die Druckluftzufuhr (19) des Verteilergetriebedifferentials (11) und auch an die Druckluftzufuhr (20) von den Achsdifferentialen und/oder der Anzeigeeinrichtung für niedrige Gänge angeschlossen. Bei zugeschaltetem Verteilergetriebedifferential sowie gegebenenfalls zugeschalteten Achsdifferentialen und/oder niedrigen Gängen strömt Druckluft in den Zylinder, bewirkt eine Längenänderung Δ L dieser Regeleinheit und somit eine Veränderung der Stellung des Regelhebels an der Einspritzpumpe (3).

Bei einem Fahrzeug (2) ohne Allrad-Antrieb gemäß Fig. 5 kann die Regelstange an der Einspritzpumpe (3) mittels Stellmotor gemäß Ausführungsbeispiel der Fig. 2 betätigt werden.

Alternativ kann bei einem Fahrzeug ohne Allrad-Antrieb die Einspritzpumpe (3) mittels einfach wirkendem Druckluftzylinder gemäß den Fig. 6 und 7 betätigt werden, der an das Getriebe (5) angeschlossen ist. Bei einer Beaufschlagung der Druckluftzufuhr (21) vom Getriebe (5) wird eine Veränderung Δ L der Regelstange an der Einspritzpumpe (3) im Sinne verminderter Brennstoffeinspritzung bewirkt.

**Patentansprüche**

1. Antriebseinheit (1) eines Kraftfahrzeuges (2), insbesondere Nutzfahrzeuges, mit durch Einspritzpumpe (3) geregeltem Verbrennungsmotor (4), Getriebe (5) und Antriebsstrang (6) zu den angetriebenen Achsen (7–19) mit zumindest einem zwischengeordneten Sperrdifferential (11, 12), wobei eine Sensoranordnung (13) vorgesehen ist, die das Drehmoment (M) im Antriebsstrang (6) ermittelt und bei Überschreitung eines vorgegebenen Drehmomentwertes über Steuermittel (14) die Einspritzpumpe (3) im Sinne verminderter Brennstoffeinspritzung steuert, dadurch gekennzeichnet, daß die Sensoranordnung (13) die Sperrung des Getriebedifferentials (11) ermittelt und bei Sperrung des Getriebedifferentials (11) über die Steuermittel (14) die Einspritzpumpe (3) im Sinne verminderter Brennstoffeinspritzung steuert.

2. Antriebseinheit nach Anspruch 1, dadurch gekennzeichnet, daß die Sensoranordnung (13) die Sperrung eines längsgesperrten Verteilergetriebedifferentials (11) ermittelt und bei Sperrung des Verteilergetriebedifferentials (11) über die Steuermittel (14) die Einspritzpumpe (3) im Sinne verminderter Brennstoffeinspritzung steuert.

3. Antriebseinheit nach einem der Ansprüche 1 oder 2, dadurch gekennzeichnet, daß die Sensoranordnung (13) die Sperrung eines Achsdifferentials (12) ermittelt und bei Sperrung des Achsdifferentials (12) über die Steuermittel (14) die Einspritzpumpe (3) im Sinne verminderter Brennstoffeinspritzung steuert.

4. Antriebseinheit nach einem der Ansprüche 1 bis 3, dadurch gekennzeichnet, daß die Steuermittel (14) einen elektrischen Stellmotor umfassen, der die Regelstange der Einspritzpumpe (3) betätigt.

5. Antriebseinheit nach einem der Ansprüche 1 bis 4, für ein Fahrzeug mit Allrad-Antrieb, dadurch gekennzeichnet, daß die Steuermittel (14) einen mehrfach wirkenden Druckluftzylinder (15) umfassen, der eine Veränderung ($\Delta$ L) der Stellung des Regelhebels an der Einspritzpumpe (3) bewirkt.

6. Antriebseinheit nach einem der Ansprüche 1 bis 5, für ein Fahrzeug mit Allrad-Antrieb, dadurch gekennzeichnet, daß die Steuermittel (14) einen einfach wirkenden Druckluftzylinder (16) umfassen, der an das Getriebe (5) angeschlossen ist.

7. Antriebseinheit nach einem der Ansprüche 4 bis 6, dadurch gekennzeichnet, daß die Sensoranordnung (13) einen mechanisch-elektrischen Schalter umfaßt, der bei entsprechender Schaltwellenstellung einer mechanischen Gangschaltung die Steuermittel (14) aktiviert.

8. Antriebseinheit nach einem der Ansprüche 4 bis 6, dadurch gekennzeichnet, daß die Sensoranordnung (13) einen pneumatischen Geber umfaßt, der bei entsprechender Gangeinstellung einer pneumatischen Gangschaltung die Steuermittel (14) aktiviert.

## Claims

1. A drive assembly (1) for a motor vehicle (2), especially a commercial vehicle, the assembly comprising an internal combustion engine (4) governed by an injection pump (3), a gearbox (5) and a drive shaft (6) to the axles (7 – 10) to be driven and including at least one differential lock gear (11, 12), wherein a sensor (13) serving to detect the drive-shaft (6) torque (M) is provided, and wherein the sensor, if the torque exceeds a predetermined value, adjusts via control means (14) the pump (3) so as to reduce the quantity of fuel injected, characterized in that the sensor (13) detects the locking of the differential lock gear (11) and in the event of the gear (11) locking adjusts via the control means (14) the injection pump (3) so as to reduce the quantity of fuel injected.

2. A drive assembly according to claim 1, characterized in that the sensor (13) detects the locking of the, longitudinally locking, differential lock gear (11), which is a distributor gear, and in the event of this gear (11) locking adjusts via the control means (14) the pump (3) so as to reduce the quantity of fuel injected.

3. A drive assembly according to claim 1 or claim 2, characterized in that the sensor (13) detects the locking of the differential gear (12), which is an axle gear, and in the event of the gear (12) locking adjusts via the control means (14) the pump (3) so as to reduce the quantity of fuel injected.

4. A drive assembly according to any of the claims 1 to 3, characterized in that the control means (14) include an electric servomotor serving to actuate the governor rod of the pump (3).

5. A drive assembly according to any of the claims 1 to 4 for a motor vehicle with all-wheel drive, characterized in that the control means (14) include a multi-acting compressed-air cylinder (15) serving to bring about a change ($\Delta$ L) of the position of the pump's (3) governor lever.

6. A drive assembly according to any of the claims 1 to 5 for a motor vehicle with all-wheel drive, characterized in that the control means (14) include a single-acting compressed-air cylinder (16) connected to the gearbox (5).

7. A drive assembly according to any of the claims 4 to 6, characterized in that the sensor (13) is an electromechanical switch which, when the gear-lever shaft of a mechanical gear-change system has been shifted to an appropriate position, activates the control means (14).

8. A drive assembly according to any of the claims 4 to 6, characterized in that the sensor (13) is a pneumatic transmitter which, when a pneumatic gear-change system has been moved to an appropriate gear ratio, activates the control means (14).

## Revendications

1. Ensemble de propulsion pour véhicules à moteur (2) notamment à véhicules utilitaires comportant un moteur à combustion interne (4) réglé par une pompe d'injection (3), une boîte de vitesses (5) et une transmission (6) pour les essieux moteurs (7–10), avec au moins un différentiel à blocage intermédiaire (11, 12), un dispositif à capteur (13) étant prévu pour déterminer le couple (M) de la transmission (6) et le dépassement d'une valeur prédéterminée du couple par des moyens de commande (14), agit sur la pompe d'injection (3) pour réduire l'injection, ensemble caractérisé en ce que: le dispositif à capteur (13) détermine le blocage du différentiel (11) et en cas de blocage de ce différentiel (11), il commande par le moyen de commande (14), la pompe d'injection (3) pour réduire l'injection.

2. Ensemble de propulsion selon la revendication 1, caractérisé en ce que le dispositif à capteur (13) détermine le blocage d'un différentiel-répartiteur à blocage longitudinal (11) et lorsque ce différentiel (11) est bloqué, il commande par l'intermédiaire du moyen de commande (14), la pompe d'injection (3) pour réduire l'injection.

3. Ensemble de propulsion selon l'une des revendications 1 ou 2, caractérisé en ce que le dispositif à capteur (13) détermine le blocage d'un différentiel d'essieu (12) et en cas de blocage de ce différentiel (12), il commande par l'intermédiaire du moyen de commande (14), la pompe d'injection (13) pour réduire l'injection de carburant.

4. Ensemble de propulsion selon l'une des revendications 1 à 3, caractérisé en ce que les moyens de commande (14) comprennent un moteur de réglage électrique qui actionne la tringle de réglage de la pompe d'injection (3).

5. Ensemble de propulsion selon l'une des revendications 1 à 4 pour un véhicule dont toutes les roues sont motrices, ensemble caractérisé en ce que les moyens de commande (14) comprennent un vérin à air comprimé (15) à effet multiple qui assure une variation Δ L de la position de la tringle de réglage de la pompe d'injection (3).

6. Ensemble de propulsion selon l'une des revendications 1 à 5 pour un véhicule dont toutes les roues sont motrices, caractérisé en ce que les moyens de commande (14) comprennent un vérin à air comprimé (16) à simple effet qui est relié à la transmission (5).

7. Ensemble de propulsion selon l'une des revendications 4, 6, caractérisé en ce que le dispositif à capteur (13) comprend un commutateur mécanique-électrique qui active les moyens de commande (14) pour une position correspondante de l'axe de commutation d'une boîte de vitesses mécanique.

8. Ensemble de propulsion selon l'une des revendications 4 à 6, caractérisé en ce que le dispositif à capteur (13) comprend un capteur pneumatique qui, pour une position correspondante d'une boîte de vitesses pneumatique, active les moyens de commande.

Fig. 1

[Nm]

M

R

2000

100 [%]

1000

M

50

1000

1800 [min⁻¹]

n

EP 0 250 957 B1

EP 0 250 957 B1

Fig. 2

Fig. 3

Fig. 4

Fig. 7

Fig. 5

Fig. 6